# EUROPEAN PATENT SPECIFICATION

(11) **EP 2 031 987 B1**
(45) Date of publication and mention of the grant of the patent: **27.11.2013**
(21) Application number: 07798365.8
(22) Date of filing: 11.06.2007
(51) Int. Cl.: A23L 2/00, A23L 1/05, A23L 1/054, A23L 1/0534, A23L 2/66, A23L 2/52, A23L 2/44, A23L 2/02, A23C 9/154

(54) **ACIDIFIED PROTEIN BEVERAGES CONTAINING SUSPENDED PARTICULATES AND METHODS OF MAKING SAME**
ANGESÄUERTE PROTEINGETRÄNKE MIT SCHWEBSTOFFEN UND HERSTELLUNGSVERFAHREN DAFÜR
BOISSONS PROTÉINÉES ACIDIFIÉES CONTENANT DES PARTICULES EN SUSPENSION ET LEURS MÉTHODES DE FABRICATION

(30) Priority: 22.06.2006 US 425880
(43) Date of publication of application: 11.03.2009
(73) Proprietor: CP Kelco U.S., Inc., Atlanta, GA 30339 (US)
(72) Inventor: Jackson, Philip Henry, Abbotsford NSW 2046 (AU); Yuan, Chienko Ronnie, San Diego, CA 92130 (US); Kazmierski-Steele, Michelle Nicole, San Diego, CA 92123 (US); HO, Shiong Bock John, Singapore 752510 (SG); GOH, Hwee Kwang, Singapore 120 306 (SG)
(74) Representative: Kiernan, Lisa
(86) International application number: PCT/US2007/070844
(87) International publication number: WO 2007/149719

(56) References cited:
- EP-A1- 1 488 708
- WO-A1-03/005837
- WO-A2-2007/016547
- US-A- 5 376 396
- US-A1- 2007 026 124
- PATENT ABSTRACTS OF JAPAN & JP 2002 300849 A (YAKULT HONSHA CO LTD) 15 October 2002

## Description

### BACKGROUND OF THE INVENTION

Acidified protein beverages have traditionally included at least one of four hydrocolloids: pectin, cellulose gum, soy bean fiber, or propylene glycol alginate (PGA). There are numerous publications describing their use for this purpose, mainly associated with the stabilization of the protein micro-particles. Acidified protein beverages have preferentially included the use of the aforementioned hydrocolloids as stabilizers because they prevent the protein from denaturing in the acidic environment. The absence of the aforementioned hydrocolloids many times results in excessive protein agglomeration leading to precipitation or curdling and impaired organoleptic attributes.

The aforementioned hydrocolloids offer stabilizing effects on proteins in these types of beverages because they effectively minimize the proteins' micellular size. This leads to improved suspension stability of the proteins according to the principles of Stoke's Law. The smaller the particulates the more effective the suspension. Therefore, large and or heavy particulates are less able to be effectively suspended. As a result, acidified protein beverages containing large or heavy particulates require an enhanced viscosity profile with a high degree of pseudoplasticity and an appropriate elastic modulus.

Suspending particulates such as fruit pulp, fibers, calcium or other fortifying minerals, has long been a demand within the food industry and in particular in the processing of soy and dairy beverages. The acidic versions of these beverages present particular challenges. The many hydrocolloids that may be expected to bring more suspensive viscosity profiles, thereby augmenting the protein protective effects of the protein stabilizing hydrocolloids, tend to bring inherently negative effects on the action of the latter without the expected rheological enhancement. Typically traditional suspending agents such as cellulose gum, guar, xanthan gum and even starch have been attempted but invariably result in an inferior mouthfeel and a grainy or flocculated appearance that are not preferred by consumers.

Gellan gum has gained worldwide popularity as a rheology modifier. It is known as a highly effective suspending agent due to the improved yield stress that it imparts upon liquids. At rest, gellan gum has high viscosity but when disturbed or agitated this increased viscosity dissipates and pseudoplastic behavior is exhibited. This pseudoplastic behavior suspends particulates without imparting too much apparent viscosity manifested as excessive mouthfeel. It is many times referred to as a "fluid gel" due to its dual pseudoplastic (shear thinning) and suspending nature. Other hydrocolloids such as agar, alginates, carrageenans and low methoxy pectin also exhibit this fluid-gel behavior. While gellan gum imparts excellent suspension, it typically promotes the aggregation of protein in acidic environments when used as the sole stabiliser and for this reason has not been used commercially in acidified protein beverages.

It is desired within the beverage industry to provide acidic protein beverages, including but not limited to acidic milk or soy drinks containing suspended particulates. JP2002300849 (Yakult) and WO034/005837 (Abbott Laboratories) disclose acidified protein beverages which contain cellulose gum and gellan gum. US5376396 (Merck) discloses an acidic beverage comprising fruit pulp can be stabilised by the combination of cellulose gum and gellan gum.
The current invention is directed to using gellan gum in combination with cellulose gum. More specifically, this invention is directed to acidified protein beverages using the fluid-gel behavior provided by gellan gum in conjunction with simultaneous stabilization of proteins and suspension of particulates provided by cellulose gum.

### BRIEF SUMMARY OF THE INVENTION

The invention is as defined in the claims.

Acidified protein beverages represent a major growth area for human food choice due to their pleasing taste, convenience, and healthy, nutritious image. New innovations in the technology of these beverages require developments with regard to the expansion of the systems to add novel characteristics such as the inclusion of juice pulps and sacs, fruit pieces, jelly bits, cereal particles, fibrous vegetable matter, dietary fiber, insoluble minerals and so on. Prior to the present invention it was not practical to sustain the suspension of large and/or dense particulates in the stabilization of acidified protein beverages whether for a short time of even several hours or over the long life of sterilized forms of the product. The current technology of acidified protein beverages stabilization depends on using protective colloids to keep micellular or similar very finely divided protein particles from agglomeration or coalescence by what is generally believed to be an adsorption mechanism such that the particles stay small enough to suspend, according to Stake's Law. The part of the protective colloid that is not adsorbed to the protein has a low capacity to provide the necessary structure to suspend small or large particulates or for that matter, larger protein particles. There are certain principles that govern the effective protein protection relating to the type and quality of the protein or proteins concerned: the ionic and pH environment, the intrinsic characteristics of the polysaccharide being used to provide that effect, and the process conditions that are applied. Indeed, some polysaccharides of (apparently) excessive or incorrect charge configuration exacerbate protein coalescence and are repeatedly shown to impede the ability of known protective hydrocolloids to fulfill their generally accepted function in acidified protein beverages.

Structure-forming, colloidally dispersed polysaccharides are known to form cross linked suspension mechanisms (some times referred to as "fluid gels" or "interrupted gels") that demonstrate strong pseudoplasticity and a yield point and have been demonstrated to have a strong ability to suspend large particulates with a surprisingly small effect on perceived viscosity, significantly more so than using non-structure forming polysaccharides like xanthan gum. The technology of fluid-gels is well established in neutral pH soy and cow milk drinks and in non proteinaceous beverages (such as fruit beverages) using several colloids and combinations thereof.

The generally held belief is that according to the conventional production methods for acidified protein beverages that other polysaccharides have an inappropriate charge and/or static potential which can interfere with the ability of the protective colloid to adsorb to the protein micelles. In fact they generally promote agglomeration rather than prevent it.

Typically gellan gum, which is anionic in nature, promotes the aggregation of protein when used in an acidic environment, however, cellulose gum, pectin, soy bean fiber and propylene glycol alginate, which are also anionic, have successfully been used in acidic beverages without promoting the aggregation of the protein micelles to an excessive degree. Combinations of low anionic, almost neutrally charged gums such as guar and locust bean gum with gellan gum or more highly anionic gums such as xanthan gum with gellan gum, have historically been unusable in acid protein beverages. Based on these past observations in the art, it would be unexpected that two anionic hydrocolloids would be useful for suspension of particulates in an acidic beverage. Furthermore, it was unexpected that either high acyl or low acyl gellan gum had significant value as a suspension aid in either directly acidified or cultured acidified milk drink either alone or in combination with other hydrocolloids.

It has been demonstrated that in dairy and soy based acidified protein beverages, as non-limiting examples of acidified protein beverages, use of gellan gum does not impede the protective colloidal activity of cellulose gum during the production of the acidified protein beverages and that this combination can be activated in a convenient and one-step operation. The result is that the gellan gum's highly suspensive cross-linked molecular network is distributed throughout the drink providing a much greater capacity for suspension of large particulates.

The mixture of structure forming polysaccharide and protective colloid is introduced in such a way that the latter is hydrated while the former remains in a dispersed and unhydrated form or solubilised where it can then be cross-linked and thus similarly unavailable as if only dispersed, before combination with the milk protein portion. Alternatively the former may be added separately as a dispersion or in a cross-linked fluid gel form and the latter as a separate solution. Once the conventional steps of promoting protein adsorption of the protective colloid are completed, mainly through heating, homogenization, and pH adjustment, the acidified protein beverage is then exposed to heating conditions that hydrate the gellan gum. Full activity of the protective colloid and the fluid gel production is believed to occur during cooling and shearing. As the acidified protein beverages are exposed to conditions of dynamic turbulent cooling the gellan gum forms a structured network, or fluid gel, thereby improving suspension through high pseudoplasticity with a yield point, as determined by the dynamic conditions of cooling and its particular concentration. If large particulates are introduced either before or after heating the finished and packaged, the acidified protein beverage will have dramatically improved suspension and increased utility depending on the sterility of the conditions applied.

It is especially desired to introduce particulates, orange pulp is one non-limiting example, directly into acidified protein beverage after homogenization but prior to ultra high temperature treatment to achieve suspension of particulates in the final long-life package, or at the very least, in a sterile storage system.

Acidified protein beverage stabilized with specific grades and concentration of a cellulose gum and gellan gum combination yielded positive results with regard to resistance to whey-off and sediments in low protein acidified protein beverage. As such, this system was significantly effective in demonstrating effective suspension of orange pulp and can be used to include particulates on both a macro and micro scale. This cellulose gum/gellan gum system is consistent with standard cellulose gum based long-life ultra high temperature acidified protein beverage and, at a minimum, is applicable to chilled short-life products. These cellulose gum/gellan gum combinations have applications in both sterile and pasteurized acidified protein beverage systems.

Stable acidified milk drinks with suspended particulates have been achieved in the absence of additional agents. The suspension of orange pulp in acidified milk drinks using a combination of cellulose gum and gellan gum as a substitute for single gum varieties is described herein. One method described herein requires heat treatment to hydrate the protective colloid while another simpler system requires only cold hydration of the protective colloid.

A stable acidified milk drink with low protein denaturation or whey separation in an acidified milk drink with greater than 0% to 5% protein, with about 0.2% to about 1.0% cellulose gum, provides for sufficient pulp suspension independent of a gellan gum level from about 0.01 to about 0.05%. At least about 0.02% gellan gum is required for short term suspension of orange pulp in acidified milk drink. Long term suspension of orange pulp requires at least about 0.025% gellan gum, more preferably, about 0.03%, and most preferably about 0.05%.

It has been determined that cellulose gum can work well in conjunction with gellan gum as a stabilizer/suspender for acidified milk drink in both a cold and heated hydration system. Cellulose gum in some cases might be preferred in certain situations using the cold hydration system.

The current invention is directed to an acidified protein beverage as claimed in Claim 1.

The current invention is also directed to a method of making an acidified protein beverage as claimed in Claim 9.

Orange pulp is one non-limiting example of particulates that may be suspended in the acidified protein beverage of the invention, without sacrificing mouthfeel.

BRIEF DESCRIPTION OF THE SEVERAL VIEWS OF THE DRAWINGS

The foregoing summary, as well as the following detailed description of preferred embodiments of the invention, will be better understood when read in conjunction with Tables 1-20. It should be understood, however, that the invention is not limited to the precise arrangements and instrumentalities shown.

### DETAILED DESCRIPTION OF THE INVENTION

Two initial systems were tested to achieve the suspension of orange pulp within an acidified milk drink (See Example 1, *supra*). System 1, high acyl gellan gum blended with a sodium cellulose gum, and system 2, high methoxy pectin, were compared in an ultra high temperature sterilized acidified milk drink. The results unexpectedly demonstrated that gellan gum had significant value as a suspension aid in directly acidified milk drinks with another hydrocolloid.

### EXAMPLE 1

Samples were prepared to evaluate the suspension of fruit pulp and protein in an acidified milk drink containing 1% protein at pH 4.0. A comparison was made between a high acyl gellan gum and cellulose gum stabilizing blend and a high acyl gellan gum and high methoxy pectin stabilizing blend.

**Table 1: Formulation and variables for acidified milk drinks.**

| **Batches No Ingredients** | **1 (5/12) %** | **2(5/12) %** | **3(5/12) %** | **4(5/12) %** | **5(5/12) %** | **6(5/12) %** |
|---|---|---|---|---|---|---|
| Milk solids non-fat (20% solution) | 15 | 15 | 15 | 15 | 15 | 15 |
| Orange Juice Concentrate (65° Brix) | 2.3 | 2.3 | 2.3 | 2.3 | 2.3 | 2.3 |
| Orange fruit pulp* | 9.0 | 9.0 | 9.0 | 9.0 | 9.0 | 9.0 |
| Sugar | 9.075 | 9.09 | 9.09 | 9.075 | 9.09 | 9.075 |
| High acyl gellan gum | 0.025 | 0.03 | 0.03 | 0.025 | 0.03 | 0.025 |
| Cellulose gum (2.0 % solution) | 0 | 0 | 0 | 0 | 17.5 | 20.0 |
| High methoxy pectin (2.0% solution) | 20 | 19 | 20 | 22.5 | 0 | 0 |
| 20% Citric acid | 0.82 | 0.86 | 0.86 | 0.89 | 1.12 | 1.26 |
| Water | 52.78 | 53.72 | 52.72 | 50.21 | 54.96 | 52.34 |

| | | | | | | |
|---|---|---|---|---|---|---|
| * Note: the amount of fruit pulp used is not included in the total volume of the formulation, but is added in addition to the total ingredients. | | | | | | |

The process to prepare the samples follows:
1. Disperse milk solids non-fat powder into 50°C DI water using a high speed mixer to make up a 20% skim milk solution. Cool to ambient temperature.
2. Disperse pectin or cellulose gum powder into a 75°C DI water and stir using a Silverson^{®} mixer to make 2% solutions of each hydrocolloid. Cool to ambient temperature.
3. Combine the non-fat dry milk (NFDM) solution, sugar and gellan gum, and pectin or cellulose gum solution and stir using a Silverson^{®} mixer.
4. Add orange juice concentrate and adjust the pH to 4.0 using a 20% citric acid solution, while stirring.
5. Process the beverage with a 70°C pre-heat temperature, homogenization at 2600 psi (single stage) and a final heat treatment of 121 °C for 3.0 seconds.
6. Fill aseptically into 8*- 250 mL polyethylene terephthalate (PETG) bottles between 25-27°C. (*Note: 4 bottles contained 10g of additional orange fruit pulp to evaluate its suspension in the acidified milk drink).

All samples were stored at 5°C. After one week, stored samples were evaluated at 5°C and 25°C (the room temperature samples were taken out of refrigerated conditions, were held at room temperature for three days, and then observed). Visual observations were made on the stability of protein and orange pulp at both temperatures. These observations are set forth in Table 2. The viscosity of the drinks (without orange pulp) was measured at 5° and 25°C using a LV Brookfield^{®} viscometer with spindle 1, after 1 minute of rotation at both 6 and 60 rpm. pH values are also reported at 25°C. See Table 3.

**Table 2: Observations for the acidified milk drinks.**

| **Batches No** | **1 (5/12)** | **2(5/12)** | **3(5/12)** | **4(5/12)** | **5(5/12)** | **6(5/12)** |
|---|---|---|---|---|---|---|
| Observation of protein @ 5°C | Stable | Sedimentation | Stable | Sedimentation | Stable | Stable |
| Observation of fruit pulp @ 5°C | Instability | Instability | Instability | Instability | Suspension | Suspension |
| Observation of protein @ 25°C | Whey off | Sedimentation | Whey off | Sedimentation | Stable | Stable |

**Table 3: Analysis of acidified milk drinks.**

| **Batches No** | **1 (5/12)** | **2(5/12)** | **3(5/12)** | **4(5/12)** | **5(5/12)** | **6(5/12)** |
|---|---|---|---|---|---|---|
| 6 rpm @ 5°C (cPs) | 42.00 | 20.33 | 29.33 | 38.67 | 129.00 | 91.33 |
| 6 rpm @ 25°C (cPs) | 25.53 | 12.83 | 20.27 | 21.40 | 36.07 | 32.23 |
| 60 rpm @ 5°C (cPs) | 26.67 | 20.00 | 21.00 | 23.00 | 66.33 | 42.00 |
| 60 rpm @ 25°C (cPs) | 16.20 | 8.50 | 12.83 | 12.57 | 21.00 | 19.17 |
| pH | 4.27 | 4.32 | 4.28 | 4.16 | 4.28 | 4.22 |

According to this specific process, the various use levels of high methoxy pectin in combination with different use levels of high acyl gellan gum were not effective in suspending orange pulp, and the stability of the drinks was not satisfactory.

The two combinations of acidified milk drinks using cellulose gum in combination with high acyl gellan gum exhibited improved stability and suspension of orange pulp. The cellulose gum added some viscosity to the beverages compared to the pectin based system, however, this was not as significant at room temperature compared to 5°C. The viscosity of the 0.35% cellulose gum concentration in sample 5(5/12) was higher than the 0.40% concentration in sample 6(5/12), however, both of these concentrations of cellulose gum in combination with gellan gum produced stable fruit pulp and protein in the beverage.

### EXAMPLE 2

Samples were prepared to determine the stability of fruit pulp and protein in acidified milk drinks stabilized with cellulose gum and high acyl gellan gum using different hydration methods of the cellulose gum, and to assess the optimum cellulose gum to high acyl gellan gum ratio.

**Tables 4: Formulation and variables for acidified milk drinks**

| **Batches No Ingredients** | **5(21/12) %** | **6(21/12) %** | **5a(21/12) %** | **7(21/12) %** | **8(21/12) %** | **9(21/12) %** |
|---|---|---|---|---|---|---|
| Non-fat dry milk powder (20% solution) | 15 | 15 | 15 | 15 | 15 | 15 |
| 50% Fruit Juice Concentrate (32.5°Brlx) | 4.6 | 4.6 | 4.6 | 4.6 | 4.6 | 4.6 |
| Orange fruit pulp* | 9.0 | 9.0 | 9.0 | 9.0 | 9.0 | 9.0 |
| Sugar | 9.15 | 9.1 | 9.2 | 10.41 | 10.88 | 10.69 |
| High acyl gellan gum | 0.03 | 0.025 | 0.03 | 0.03 | 0.025 | 0.025 |
| Cellulose gum (1.25% solution) | 28 | 32 | 20.16 | 0 | 0 | 0 |
| Cellulose gum | 0 | 0 | 0 | 0252 | 0.288 | 0.252 |
| 20% Citric acid | 1.64 | 1.7 | 1.73 | 1.64 | 1.7 | 1.73 |
| Water | 41.58 | 37.575 | 49.28 | 68.068 | 67.507 | 67.703 |

**Table 5: Formulation and variables for acidified milk drinks**

| **Batches No Ingredients** | **10(22/12) %** | **11(22/12) %** | **12(22/12) %** | **13(22/12) %** | **14(22/12) %** | **15(22/12) %** |
|---|---|---|---|---|---|---|
| Non-fat dry milk powder (20% solution) | 15 | 15 | 15 | 15 | 15 | 15 |
| 50% Fruit Juice Concentrate (32.5 Brix) | 4.6 | 4.6 | 4.6 | 4.6 | 4.6 | 4.6 |
| Orange fruit pulp* | 9.0 | 9.0 | 9.0 | 9.0 | 9.0 | 9.0 |
| Sugar | 9.12 | 9.395 | 9.37 | 9.12 | 9.395 | 9.385 |
| High acyl gellan gum | 0.01 | 0.015 | 0.02 | 0.01 | 0.015 | 0.015 |
| Cellulose gum | 0.252 | 0.252 | 0252 | 0.126 | 0.3 | 0.189 |
| 20% Citric acid | 1.63 | 1.63 | 1.63 | 1.63 | 1.63 | 1.63 |
| Water | 68.098 | 67.803 | 67.808 | 68.854 | 67.515 | 68.191 |

| | | | | | | |
|---|---|---|---|---|---|---|
| * Note: the amount of fruit pulp used is not included in the total volume of the formulation, but is added in addition to the total ingredients. | | | | | | |

Process A is the same as the process set forth in Example 1.

Process B is set forth below.
1. Disperse milk solids non-fat powder and dry cellulose gum into 50°C DI water using a high speed mixer to make up a 20% skim milk-cellulose gum solution. Cool to ambient temperature.
2. Combine the NFDM and cellulose gum solution with sugar and gellan gum and stir using a Silverson^{®} mixer.
3. Add orange juice concentrate and adjust the pH to 4.0 using a 20% citric acid solution, while stirring.
4. Process the beverage with a 70°C pre-heat temperature, homogenization at 2600 psi (single stage) and a final heat treatment of 121°C for 3.0 seconds.
5. Fill aseptically into 8*- 250 mL PETG bottles between 25-27°C. (*Note: 4 bottles contained 10g of additional orange fruit pulp to evaluate its suspension in the acidified milk drink).

Acidified milk drinks were prepared to compare the suspension performance of protein and orange pulp using different ratios of cellulose gum to high acyl gellan gum. The beverages were formulated to provide 1.0% protein at pH 4.0. See Tables 4 and 5.

Two different methods were employed to incorporate the cellulose gum into the drink. A separate hot solution of cellulose gum was prepared, similar to a preparation method for pectin (Process A). The second method involved adding dry cellulose gum directly to a 50°C non-fat dry milk powder solution and hydrating in this system (Process B). In both methods no attempt was made to hydrate the native gellan gum at the gum inclusion stage.

After filling, all of the drinks were stored at 5°C. The finished drinks were observed after one week at 5 and 25°C (the ambient temperature samples were taken out of refrigerated conditions, were held at room temperature for three days, and then observed). See Tables 6 and 7.

For the Process A batches, batch 5 and 5a provided good stability, but batch 6 had some slight settling, which could be attributed to an insufficient concentration of high acyl gellan gum. See Table 6. Process B also gave good stability in batches 7-9, suggesting that both methods are sufficient for hydrating the cellulose gum and either can be used for stabilizing acidified milk drinks.

The viscosities of batches 10-15 were significantly lower than batches 5-9, and were not stable. See Tables 6, 7, 8 and 9. It may be assumed that the use levels of high acyl gellan gum in batches 10-15 were too low for these samples and should be at least 0.03% high acyl gellan gum.

**Table 6: Observations of acidified milk drinks stored at various conditions**

| **Storage Conditions** | **Batch Number 5(21/12)** | **Batch Number 6(21/12)** | **Batch Number 5a(21/12)** | **Batch Number 7(21/12)** | **Batch Number 8(21/12)** | **Batch Number 9(21/12)** |
|---|---|---|---|---|---|---|
| Storage@ 5°C, protein stability | Stable | Stable | Stable | Stable | Stable | Stable |
| Storage @ 5°C, Pulp Suspension | Suspension | Slight instability | Suspension | Suspension | Suspension | Suspension |
| Storage @ 25°C, Protein Stability | Stable | Stable | Stable | Stable | Stable | Stable |

**Table 7: Observations of acidified milk drinks stored at various conditions.**

| **Storage Conditions** | **Batch Number 10(22/12)** | **Batch Number 11(22/12)** | **Batch Number 12(22/12)** | **Batch Number 13(22/12)** | **Batch Number 14(22/12)** | **Batch Number 15(22/12)** |
|---|---|---|---|---|---|---|
| Storage @ 5°C, protein stability | Stable | Stable | Stable | Instability | Stable | Stable |
| Storage @ 5°C, protein stability | Instability | Instability | Instability | Instability | Instability | Instability |
| Storage @ 25°C, protein stability | Stable | Stable | Stable | Instability | Stable | Whey off |

**Table 8: Viscosity (cP) and pH of acidified milk drinks for example 2.**

| **Batch Number** | **5(21/12)** | **6(21/12)** | **5a(21/12)** | **7(21/12)** | **8(21/12)** | **9(21/12)** |
|---|---|---|---|---|---|---|
| 6 rpm @ 5 degree C | 29.33 | 28.67 | 25.67 | 66.67 | 47.33 | 36.67 |
| 6 rpm @ 25 degree C | 26.33 | 17.33 | 17.33 | 33.33 | 28.00 | 25.00 |
| 60 rpm @ 5 degree C | 15.63 | 16.03 | 12.97 | 22.07 | 20.20 | 15.73 |
| 60 rpm @ 25 degree C | 12.43 | 10.93 | 9.90 | 13.63 | 12.83 | 11.23 |
| pH after processing | 4.06 | 4.05 | 4.05 | 4.10 | 4.09 | 4.07 |

**Table 9: Viscosity (cP) and pH of acidified milk drink for example 2.**

| **Batch Number** | **10(22/12)** | **11(22/12)** | **12(22/12)** | **13(22/12)** | **14(22/12)** | **15(22/12)** |
|---|---|---|---|---|---|---|
| 6 rpm @ 5 degree C | 13.67 | 14.33 | 17.33 | - | 11.00 | 6.67 |
| 6 rpm @ 25 degree C | 8.33 | 10.00 | 10.00 | - | 12.67 | 10.33 |
| 60 rpm @ 5 degree C | 7.77 | 9.63 | 11.10 | - | 10.93 | 7.07 |
| 60 rpm @ 25 degree C | 16.20 | 8.50 | 12.83 | - | 8.40 | 5.43 |
| pH after processing | 4.18 | 4.13 | 4.08 | 4.17 | 4.13 | 4.13 |

### EXAMPLE 3

Samples were prepared to demonstrate the stability of acidified dairy drinks (1.5% protein) using various ratios of cellulose gum in combination with 0.03% high acyl gellan gum compared to stabilization with 0.40% high methoxyl pectin in combination with 0.03% high acyl gellan gum.

**Table 10: Stablility of acidified dairy drinks using various ratios of cellulose gum with high acyl gellan gum vs. high methoxy pectin with high acyl gellan gum.**

| | **0.40% pectin + 0.03% high acyl gellan gum** | | **0.25% cellulose gum + 0.03% high acyl gellan gum** | | **0.32% cellulose gum + 0.03% high acyl gellan gum** | | **0.40% cellulose gum + 0.03% high acyl gellan gum** | |
|---|---|---|---|---|---|---|---|---|
| | **Percent (w/w)** | **Grams** | **Percent (w/w)** | **Percent (w/w)** | **Grams** | **Grams** | **Percent (w/w)** | **Grams** |
| **Water** | 45.17 | 2258.5 | 52.67 | 2633.5 | 49.17 | 2458.5 | 45.17 | 2258.5 |
| **Skim milk solution (20% MSNF)** | 22.5 | 1125 | 22.5 | 1125 | 22.5 | 1125 | 22.5 | 1125 |
| **Orange juice concentrate** | 3.3 | 165 | 3.3 | 165 | 3.3 | 165 | 3.3 | 165 |
| **Sugar** | 9 | 450 | 9 | 450 | 9 | 450 | 9 | 450 |
| **HM pectin (2% solution)** | 20 | 1000 | 0 | 0 | 0 | 0 | 0 | 0 |
| **high acyl gellan gum** | 0.03 | 1.5 | 0.03 | 1.5 | 0.03 | 1.5 | 0.03 | 1.5 |
| **cellulose gum (2% solution)** | 0 | 0 | 12.5 | 625 | 16 | 800 | 20 | 1000 |
| **Sum** | 100.00 | 5000.00 | 100.00 | 100.00 | 5000.0 | 5000.0 | 100.00 | 5000.0 |

The process included dispersing milk solids non-fat powder into 25°C DI-water to make up a 20% skim milk solution. The milk solids non-fat powder and water were mixed using a high speed mixer, at a temperature of 50°C for 5 min, and then cooled to ambient temperature. Pectin or cellulose gum powder was dispersed into 50°C DI water using a high speed mixer to make a 2% solution. The Pectin or cellulose gum was then mixed for 5 minutes and allow to cool. The pectin or cellulose gum solution was added to the skim milk solution and stirred for a few minutes. The temperature of the combined solution was verified to be at about 25°C and juice was added. Sugar and high acyl gellan gum were dry-blended prior to adding to the combined solution. Orange juice concentrate was added while stirring, and the pH was adjusted to 4.0 using a 50% (w/v) citric acid solution while stirring. The beverage was then processed with 70°C pre-heat temperature, homogenization at 2600 psi (2100 first stage, 500 second stage) and a final heat of 121°C for 4 seconds followed by cooling to ambient temperature. The beverage was aseptically filled into polyethylene terephthalate copolyester Nalgene^{®} bottles at 30°C and the samples were stored at room temperature.

After 4 days of storage at room temperature, the samples were visually and orally evaluated. The high methoxy pectin control showed signs of sedimentation at the bottom of the container, even in the presence of high acyl gellan gum, however it tasted very smooth, notwithstanding evident sedimentation. For the 0.25% cellulose gum based drink there was no sedimentation evident, but the mouthfeel was objectionably grainy, which indicated that there was an insufficient amount of cellulose gum coating the protein during the acidification step. Upon increasing the cellulose gum concentration to 0.32%, the sample continued to demonstrate stable suspension and good mouthfeel. With 0.40% cellulose gum and 0.03% high acyl gellan gum, the samples were completely stable and smooth.

Viscosity and elastic modulus measurements were carried out at 20°C to test the performance of the stabilizer under these conditions. See Table 11. The pectin stabilized sample had a very low elastic modulus value of 0.01 dynes/cm², which explains the poor suspension that was evident as observed with this stabilizing system. Meanwhile, the cellulose gum stabilized samples had much higher modulus values, with the improved stabilizer systems (0.32% and 0.4% cellulose gum with 0.03% high acyl gellan gum) having values close to 1.0 dynes/cm². The high modulus in the cellulose gum/high acyl gellan gum system provided adequate suspension of the protein. The cellulose gum/high acyl gellan gum stabilized samples also had slightly higher viscosity values than the high methoxy pectin/high acyl gellan gum stabilized samples, however these values did not exceed 15 cP.

**Table 11: Visual observations, mouthfeel, viscosity and elastic modulus measurements at 20°C.**

| | **0.40% pectin + 0.03% high acyl gellan gum** | **0.25% cellulose gum + 0.03% high acyl gellan gum** | **0.32% cellulose gum + 0.03% high acyl gellan gum** | **0.40% cellulose gum + 0.03% high acyl gellan gum** |
|---|---|---|---|---|
| **Visual Observations** | Sedimentation | Stable | Stable | Stable |
| **Mouthfeel Texture** | Smooth | Grainy | Acceptable | Smooth |
| **Elastic modulus (dynes/cm²)** | 0.01 | 1.88 | 1.04 | 1.0 |
| **Viscosity (cP) at 75-s 20°C** | 6.4 | 13 | 10.8 | 14.9 |

### EXAMPLE 4

The effects of fill temperature on the stability of a cellulose gum/high acyl gellan gum stabilized acidified dairy drink at 1.5% protein were determined.

**Table 12: The effect of fill temperature on the stability of a cellulose gum/high acyl gellan gum stabilized acidified dairy drink (1.5% protein).**

| | **0.40% cellulose gum + 0.03% high acyl gellan gum 30°C fill temperature** | | **0.40% cellulose gum + 0.03% high acyl gellan gum 85°C fill temperature** | |
|---|---|---|---|---|
| | **Percent (w/w)** | **Grams** | **Percent (w/w)** | **Grams** |
| **Water** | 45.17 | 2258.5 | 45.17 | 2258.5 |
| **Skim milk solution (20% MSNF)** | 22.5 | 1125 | 22.5 | 1125 |
| **Orange juice concentrate** | 3.3 | 165 | 3.3 | 165 |
| **Sugar** | 9 | 450 | 9 | 450 |
| **high acyl gellan gum** | 0.03 | 1.5 | 0.03 | 1.5 |
| **cellulose gum (2% solution)** | 20 | 1000 | 20 | 1000 |
| **Sum** | 100.00 | 5000.00 | 100.00 | 5000.0 |

**Table 13: Effect of filling at 30°C and 85°C - visual inspection after 4 days storage at 20°C.**

| | **0.40% cellulose gum + 0.03% high acyl gellan gum 30°C fill temp** | **0.40% cellulose gum + 0.03% high acyl gellan gum 85°C fill temp** |
|---|---|---|
| **Visual Observations** | Stable | Stable |
| **Mouthfeel Texture** | Smooth | Smooth |
| **Elastic modulus (dynes/cm²)** | 1.0 | 1.37 |
| **Viscosity (cP) at 75-s 20°C** | 14.9 | 20.7 |

The process included dispersing milk solids non-fat powder into 25°C DI-water to make a 20% skim milk solution. Using a high speed mixer, a temperature of 50°C was held for 5 min and then cooled to ambient temperature. Cellulose gum powder was dispersed into 50°C DI water using high speed mixer to make 2% solution, mixed for 5 minutes and allowed to cool. cellulose gum solution was added to the skim milk solution and stirred for about 2-3 minutes. The temperature of the combined solution was verified to be at about 25°C and juice was added. Dry blend sugar and high acyl gellan gum were then added to the combined solution. Orange juice concentrate was added while stirring, and the pH was adjusted to 4.0 using a 50% (w/v) citric acid solution while stirring. The beverage was processed with 70°C pre-heat temperature, homogenization at 2600 psi (2100 first stage, 500 second stage) and a final heat of 121°C. The beverage was then filled aseptically into polyethylene terephthalate copolyester Nalgene^{®} bottles at 30°C or hot-fill into glass bottles at 85°C for 2 minutes. The samples were stored at room temperature for four days and evaluated.

Visual inspection after four days showed that both samples demonstrated good stability. See Table 14. Both the ambient and hot-filled samples were smooth in texture. Elastic modulus data comparing the two samples demonstrated high modulus values capable of keeping the proteins in suspension, though the hot-filled sample was higher in modulus than the ambient filled sample. Similarly, the hot-filled sample was higher in viscosity than the ambient filled sample. These data suggested that both fill temperatures are suitable for filling cellulose gum/high acyl gellan gum stabilized acidified dairy drinks.

**Table14: Stability of Samples at 30°C and 85°C fill temperature.**

| | **0.40% cellulose gum + 0.03% high acyl gellan gum 30°C fill temp** | **0.40% cellulose gum + 0.03% high acyl gellan gum 85°C fill temp** |
|---|---|---|
| **Visual Observations** | Stable | Stable |
| **Mouthfeel Texture** | Smooth | Smooth |
| **Elastic modulus (dynes/cm²)** | 1.0 | 1.37 |
| **Viscosity (cP) at 75-s 20°C** | 14.9 | 20.7 |

### Example 5

**Table 15: The working pH range was investigated for cellulose gum/ high acyl gellan gum stabilized acidified milk drinks (1.5% protein) for pH 3.5, 3.8, 4.0, 4.2 and 4.4.**

| | **0.40% cellulose gum + 0.03% high acyl gellan gum** | |
|---|---|---|
| | **Percent** | **Grams** |
| **Water** | 45.17 | 2258.5 |
| **Skim milk solution (20% MSNF)** | 22.5 | 1125 |
| **Orange juice concentrate** | 3.3 | 165 |
| **Sugar** | 9 | 450 |
| **high acyl gellan gum** | 0.03 | 1.5 |
| **cellulose gum (2% solution)** | 20 | 1000 |
| **Sum** | 100.00 | 5000.00 |

The process comprised dispersing milk solids non-fat powder into 25°C DI-water to make up a 20% skim milk solution. Using a high speed mixer, the solution was heated to a temperature of 50°C which was held for 5 min and then the temperature was cooled to ambient temperature. Cellulose gum powder was dispersed into 50°C DI water using a high speed mixer to make a 2% solution, mixed for 5 minutes and allowed to cool. A cellulose gum slurry was added to the skim milk solution and stirred for a few minutes. The temperature of the combined solution was verified to be at about 25°C and juice was added. Dry blended sugar and high acyl gellan gum were added to the combined solution. Orange juice concentrate was added while stirring, and the pH was adjusted to the respective pH (3.5, 3.8, 4.0, 4.2 or 4.4) using a 50% (w/v) citric acid solution while stirring. The beverage was processed with 70°C pre-heat temperature, homogenization at 2600 psi (2100 first stage, 500 second stage) and a final heat of 121°C for 4 seconds, then cooled. The beverage was aseptically filled into polyethylene terephthalate copolyester Nalgene^{®} bottles at 30°C. The samples were stored at room temperature for four days and evaluated.

After 4 days, the sample processed at pH 3.5 had large particulates suspended throughout the beverage. These beverages were considered to be extremely grainy upon oral evaluation. With an increase in pH, the protein particles became much smaller, giving a smooth texture to the beverages at pH 3.8 and higher. See Table 16.

Elastic modulus data indicated that the samples at pH 3.8 and higher were stable. The viscosity increased upon increasing the pH from 3.8 to 4.4. These samples were completely stable with no sign of visible sedimentation, suggesting that the working pH range for the cellulose gum/high acyl gellan gum stabilized acid milk drinks was 3.8-4.4. See Table 16

**Table 16: pH range evaluation for cellulose gum/ high acyl gellan gum stabilized acidified milk drinks (1.5% protein) for pH 3.5, 3.8, 4.0, 4.2 and 4.4.**

| | **pH 3.5** | **pH 3.8** | **pH 4.0** | **pH 4.2** | **pH 4.4** |
|---|---|---|---|---|---|
| **Visual Observations** | *Stable* | *Stable* | *Stable* | *Stable* | *Stable* |
| **Mouthfeel Texture** | *Extremely Grainy* | *Smooth* | *Smooth* | *Smooth* | *Smooth* |
| **Elastic modulus (dynes/cm²)** | *1.45* | *1.06* | *0.96* | *0.99* | *1.0* |
| **Viscosity (cP) at 75-s 20°C** | *13.7* | *11.7* | *12.4* | *16.7* | *21.0* |

### EXAMPLE 6

The process comprised dispersing milk solids non-fat powder or soy protein isolate into 25°C DI-water to make up a 20% skim milk solution or 5% soy protein isolate solution. Using a high speed mixer, the skim milk solution or soy protein isolate solution was heated to 50°C or 70°C, respectively, held for 5 min at either 50°C or 70°C, respectively, and then cooled to ambient temperature. Cellulose gum powder was dispersed into 50°C DI water using high speed mixer to make 2% solution, mixed for 5 minutes, and allowed to cool. Cellulose gum solution was added to the skim milk solution and stirred for a few minutes. The temperature of the combined solution was verified to be at about 25°C and juice was added. Dry blended sugar and high acyl gellan gum were added to the combined solution. Orange juice concentrate was added while stirring, and the pH was adjusted to 4.0 using a 50% (w/v) citric acid solution while stirring. The beverage was processed with 70°C pre-heat temperature, homogenization at 2600 psi (2100 first stage, 500 second stage), and a final heat of 121 °C for 4 seconds, then cooled to ambient temperature. The beverage was filled aseptically into polyethylene terephthalate copolyester Nalgene^{®} bottles at 30°C and the samples were stored at room temperature for four days and evaluated. See table 17.

**Table 17: Comparison of soy protein and dairy protein to determine the effect of protein type in a cellulose gum/high acyl gellan gum stabilized acidified protein drink.**

| | **Dairy** **0.4% cellulose gum + 0.03% high acyl gellan gum** | | **Soy** **0.45% cellulose gum + 0.03% high acyl gellan gum** | | **Soy** **0.50% cellulose gum + 0.03% high acyl gellan gum** | |
|---|---|---|---|---|---|---|
| | **Percent** | **Grams** | **Percent** | **Grams** | **Percent** | **Grams** |
| **Water** | 45.17 | 2258.5 | 32.17 | 1733.5 | 29.67 | 1483.5 |
| **Skim milk solution (20% MSNF)** | 22.5 | 1125 | 0 | 0 | 0 | 0 |
| **Soy protein isolate (5% solution)** | 0 | 0 | 33 | 1650 | 33 | 1650 |
| **Orange juice concentrate** | 3.3 | 165 | 3.3 | 165 | 3.3 | 165 |
| **Sugar** | 9 | 450 | 9 | 450 | 9 | 450 |
| **high acyl gellan gum** | 0.03 | 1.5 | 0.03 | 1.5 | 0.03 | 1.5 |
| **cellulose gum (2% solution)** | 20 | 1000 | 22.5 | 1000 | 25 | 1250 |
| **Sum** | 100.00 | 5000.00 | 100.00 | 5000.0 | 100.00 | 5000.0 |

All of the trials tested tasted smooth and had excellent stability. See Table 18. This indicated that the concentrations of cellulose gum used were sufficient for protein stability during processing. This is in agreement with the elastic modulus values obtained. Viscosity increased when switching from a dairy to a soy protein system.

**Table 18: Comparison of viscosity, elastic modules, mouthfeel and visual observation**

| | **Dairy 0.4% cellulose gum + 0.03% high acyl gellan gum** | **Soy 0.45% cellulose gum + 0.03% high acyl gellan gum** | **Soy 0.50% cellulose gum + 0.03% high acyl gellan gum** |
|---|---|---|---|
| **Visual Observations** | Stable | Stable | Stable |
| **Mouthfeel Texture** | Smooth | Smooth | Smooth |
| **Elastic modulus (dynes/cm²)** | 1.57 | 1.53 | 1.58 |
| **Viscosity (cP)** at **75-s 20°C** | 20.7 | 26.9 | 29.3 |

### Example 7:

Samples were prepared to determine how changes in protein content effect the stability of a 0.40% cellulose gum and 0.03% high acyl gellan gum stabilized acidified milk drink when using 0.5%, 1.0%, 2.0%, and 3.0% protein concentrations. The process comprised dispersing milk solids non-fat powder or soy protein isolate into 25°C DI-water to make up a 20% skim milk solution or 5% soy protein isolate solution. Using a high speed mixer, the skim milk solution or soy protein isolate solution was heated to 50°C or 70°C, respectively, held for 5 min at either 50°C or 70°C, respectively, and then cooled to ambient temperature. Cellulose gum powder was dispersed into 50°C DI water using high speed mixer to make 2% solution, mixed for 5 minutes, and allowed to cool. Cellulose gum solution was added to the skim milk solution and stirred for a few minutes. The temperature of the combined solution was verified to be at about 25°C and juice was added. Dry blended sugar and high acyl gellan gum was added to the combined solution. Orange juice concentrate was added while stirring, and the pH was adjusted to 4.0 using a 50% (w/v) citric acid solution while stirring. The beverage was processed with 70°C pre-heat temperature, homogenization at 2600 psi (2100 first stage, 500 second stage) and a final heat of 121°C for 4 seconds, then cooled to ambient temperature. The beverage was filled aseptically into polyethylene terephthalate copolyester Nalgene^{®} bottles at 30°C and the samples were stored at room temperature for four days and evaluated. See tables 19 and 20.

**Table 19: The effect of different protein content on the stability of a 0.40% cellulose gum and 0.03% high acyl gellan gum stabilized acidified milk drink when using 0.05% 1.0%, 2.0% and 3.0% protein concentration.**

| | **0.5% Protein** | | **1.0% Protein** | | **2.0% Protein** | | **3.0% Protein** | |
|---|---|---|---|---|---|---|---|---|
| | **Percent** | **Grams** | **Percent** | **Percent** | **Grams** | **Grams** | **Percent** | **Grams** |
| **Water** | 60.17 | 3008.5 | 52.67 | 2633.5 | 37.67 | 1883.5 | 22.67 | 1133.5 |
| **Skim milk solution (20% MSNF)** | 7.5 | 375 | 15 | 750 | 30 | 1500 | 45 | 2250 |
| **Orange juice concentrate** | 3.3 | 165 | 3.3 | 165 | 3.3 | 165 | 3.3 | 165 |
| **Sugar** | 9 | 450 | 9 | 450 | 9 | 450 | 9 | 450 |
| **high acyl gellan gum** | 0.03 | 1.5 | 0.03 | 1.5 | 0.03 | 1.5 | 0.03 | 1.5 |
| **cellulose gum (2% solution)** | 20 | 1000 | 20 | 1000 | 20 | 1000 | 20 | 1000 |
| **Sum** | 100.00 | 5000.00 | 100.00 | 100.00 | 5000.0 | 5000.0 | 100.00 | 5000.0 |

Upon tasting the samples, the 0.5% protein sample had slightly more perceived mouthfeel than the higher protein concentrations. The 1.0% and 2.0% protein samples tasted smooth, while 3.0% protein was grainy in texture. These data suggested that the 0.5% protein sample would require less cellulose gum to stabilize this protein content, while the 3.0% protein sample would require more cellulose gum to stabilize the protein. All samples were completely stable, with no signs of sedimentation, which was in agreement with the elastic modulus values of greater than 1.0 dynes/cm². Viscosity values were lowest with 1.0% and 2.0% protein samples.

**Table 20: Comparison ofprotein concentration on visual observation, mouthfeel, elastic modules and viscosity.**

| | **0.5% Protein** | **1.0% Protein** | **2.0% Protein** | **3.0% Protein** |
|---|---|---|---|---|
| **Visual Observations** | *Stable* | *Stable* | *Stable* | *Stable* |
| **Mouthfeel Texture** | *Smooth* | *Smooth* | *Smooth* | *Grainy* |
| **Elastic modulus (dynes/cm²)** | *0.72* | *1.05* | *1.16* | *2.27* |
| **Viscosity (cP) at 75-s 20°C** | *21.2* | *18.9* | *14.6* | *28.9* |

## Claims

1. An acidified protein beverage comprising cellulose gum present from 0.2% to 1% and gellan gum present at least at 0.025% and further comprising particulate.

2. The acidified protein beverage of claim 1 wherein said gellan gum is present at 0.01 to 0.05%.

3. The acidified protein beverage of claim 2 wherein the cellulose gum is present at 0.25%.

4. The acidified protein beverage of any of claims 1- 3 wherein said particulate is orange pulp.

5. The acidified protein beverage of any of claims 1- 4 wherein said beverage is an acidic milk drink, or acidic soy drink.

6. The acidified protein beverage of any of claims 1- 5 wherein the protein concentration is 0.05% to 5.0%.

7. The acidified protein beverage of any of claims 1- 6 wherein said beverage is stable for at least one week at room temperature.

8. The acidified protein beverage of any of claims 1- 7 wherein said beverage is stable for at least four months at 5 °C.

9. A method of making the acidified protein beverage of Claim 1 comprising comprising the steps of:
dispersing a protein base into water and mixing at about 50°C;
preparing a cellulose gum solution by dispersing cellulose gum powder into water and mixing at about 50°C;
cooling the protein dispersion and the cellulose gum solution to ambient temperature;
combining said protein dispersion and cellulose gum solution;
dry blending gellan gum and sugar then adding the gellan gum and sugar blend to the protein/cellulose gum solution;
adding a particulate solution to the combination and adjusting to about pH 4.0; 3.5, 3-8; 4.2 or 4.4;
processing the final combination of the protein, cellulose gum, gellan gum/sugar, and particulate by heating to about 70°C, homogenizing, and heating to about 121°C; and cooling to about ambient temperature.

10. The method of claim 9 wherein said protein base is milk, or a soy milk solution.

11. The method of claim 9 wherein said milk is a recombined milk solution.

12. The method of claim 9 wherein said soy milk solution is a 5% soy protein isolate solution.

13. The method of any of claims 9-12 wherein said particulate solution is orange juice.

14. The method of any of claims 9-13 wherein said pH is adjusted with a 50°C w/v citric acid solution.

## Patentansprüche

1. Ein angesäuertes Proteingetränk, das Zellulosegummi, der von 0,2 % bis 1 % vorliegt, und Gellan, das zu mindestens 0,025 % vorliegt, beinhaltet und ferner Feststoff beinhaltet.

2. Angesäuertes Proteingetränk gemäß Anspruch 1, wobei das Gellan zu 0,01 bis 0,05 % vorliegt.

3. Angesäuertes Proteingetränk gemäß Anspruch 2, wobei der Zellulosegummi zu 0,25 % vorliegt.

4. Angesäuertes Proteingetränk gemäß einem der Ansprüche 1-3, wobei der Feststoff Orangenfruchtmark ist.

5. Angesäuertes Proteingetränk gemäß einem der Ansprüche 1-4, wobei das Getränk ein saures Milchmischgetränk oder ein saures Sojamischgetränk ist.

6. Angesäuertes Proteingetränk gemäß einem der Ansprüche 1-5, wobei die Proteinkonzentration 0,05 % bis 5,0 % ist.

7. Angesäuertes Proteingetränk gemäß einem der Ansprüche 1-6, wobei das Getränk mindestens eine Woche lang bei Raumtemperatur stabil ist.

8. Angesäuertes Proteingetränk gemäß einem der Ansprüche 1-7, wobei das Getränk mindestens vier Monate lang bei 5 °C stabil ist.

9. Ein Verfahren zur Herstellung des angesäuerten Proteingetränks gemäß Anspruch 1, das die folgenden Schritte beinhaltet beinhaltet:
Auflösen einer Proteinbasis in Wasser und Mischen bei etwa 50 °C;
Zubereiten einer Zellulosegummilösung durch Auflösen von Zellulosegummipulver in Wasser und Mischen bei etwa 50 °C;
Abkühlen der Proteindispersion und der Zellulosegummilösung auf Raumtemperatur; Kombinieren der Proteindispersion mit der Zellulosegummilösung;
Trockenvermischen von Gellan mit Zucker, anschließendes Hinzugeben des Gellan- und Zuckergemisches zu der Protein-Zellulosegummilösung;
Hinzugeben einer Feststofflösung zu der Kombination und Einstellen auf einen pH-Wert von etwa 4,0; 3,5, 3-8; 4,2 oder 4,4;
Verarbeiten der endgültigen Kombination aus dem Protein, Zellulosegummi, Gellan/Zucker und Feststoff durch Erhitzen auf etwa 70 °C, Homogenisieren und Erhitzen auf etwa 121 °C; und Abkühlen auf etwa Raumtemperatur.

10. Verfahren gemäß Anspruch 9, wobei die Proteinbasis Milch oder eine Sojamilchlösung ist.

11. Verfahren gemäß Anspruch 9, wobei die Milch eine Milchpulvermilch ist.

12. Verfahren gemäß Anspruch 9, wobei die Sojamilchlösung eine 5%ige Sojaproteinisolatlösung ist.

13. Verfahren gemäß einem der Ansprüche 9-12, wobei die Feststofflösung Orangensaft ist.

14. Verfahren gemäß einem der Ansprüche 9-13, wobei der pH mit einer 50 °C w/v Zitronensäurelösung eingestellt wird.

## Revendications

1. Une boisson protéinée acidifiée comprenant de la gomme de cellulose présente de 0,2 % à 1 % et de la gomme gellane présente au moins à 0,025 % et comprenant en outre de la matière particulaire.

2. La boisson protéinée acidifiée de la revendication 1 dans laquelle ladite gomme gellane est présente à de 0,01 à 0,05 %.

3. La boisson protéinée acidifiée de la revendication 2 dans laquelle la gomme de cellulose est présente à 0,25 %.

4. La boisson protéinée acidifiée de n'importe lesquelles des revendications 1 à 3 dans laquelle ladite matière particulaire est de la pulpe d'orange.

5. La boisson protéinée acidifiée de n'importe lesquelles des revendications 1 à 4, ladite boisson étant une boisson lactée acide, ou une boisson au soja acide.

6. La boisson protéinée acidifiée de n'importe lesquelles des revendications 1 à 5 dans laquelle la concentration en protéine est de 0,05 % à 5,0 %.

7. La boisson protéinée acidifiée de n'importe lesquelles des revendications 1 à 6, ladite boisson étant stable pendant au moins une semaine à température ambiante.

8. La boisson protéinée acidifiée de n'importe lesquelles des revendications 1 à 7, ladite boisson étant stable pendant au moins quatre mois à 5 °C.

9. Une méthode de fabrication de la boisson protéinée acidifiée de la revendication 1 comprenant comprenant les étapes consistant à :
disperser une base protéinée dans de l'eau et mélanger à environ 50 °C ;
préparer une solution de gomme de cellulose en dispersant de la poudre de gomme de cellulose dans de l'eau et mélanger à environ 50 °C ;
faire refroidir la dispersion protéinée et la solution de gomme de cellulose jusqu'à la température ambiante ;
combiner ladite dispersion protéinée et ladite solution de gomme de cellulose ;
mélanger à sec de manière homogène de la gomme gellane et du sucre, puis ajouter le mélange homogène de gomme gellane et de sucre à la solution protéine/gomme de cellulose ;
ajouter une solution particulaire à la combinaison et ajuster à un pH d'environ 4,0 ; 3,5, 3-8 ; 4,2 ou 4,4 ;
traiter la combinaison finale de la protéine, de la gomme de cellulose, de gomme gellane/sucre, et de la matière particulaire en chauffant jusqu'à environ 70 °C, homogénéiser, et chauffer jusqu'à environ 121 °C ; et faire refroidir jusqu'à environ la température ambiante.

10. La méthode de la revendication 9 dans laquelle ladite base protéinée est du lait, ou une solution lactée au soja.

11. La méthode de la revendication 9 dans laquelle ledit lait est une solution lactée recombinée.

12. La méthode de la revendication 9 dans laquelle ladite solution lactée au soja est une solution d'isolat de protéines de soja à 5 %.

13. La méthode de n'importe lesquelles des revendications 9 à 12 dans laquelle ladite solution particulaire est du jus d'orange.

14. La méthode de n'importe lesquelles des revendications 9 à 13 dans laquelle ledit pH est ajusté avec une solution d'acide citrique m/v à 50 °C.
